# EUROPÄISCHE PATENTSCHRIFT

(11) **EP 3 600 829 B1**
(45) Veröffentlichungstag und Bekanntmachung des Hinweises auf die Patenterteilung: **21.06.2023**
(21) Anmeldenummer: 18711929.2
(22) Anmeldetag: 16.03.2018
(51) Int. Cl.: B29C 63/00, H02G 15/18

(54) **TEXTILER SCHLAUCH**
TEXTILE TUBE
GAINE TEXTILE

(30) Priorität: 27.03.2017 DE 102017002902
(43) Veröffentlichungstag der Anmeldung: 05.02.2020
(73) Patentinhaber: Iprotex GmbH & Co. KG, 95213 Münchberg (DE)
(72) Erfinder: WYRWIS, Bernd, 96349 Steinwiesen (DE); PIWONSKI, Timo, 96364 Marktrodach (DE)
(74) Vertreter: Kilian Kilian & Partner
(86) Internationale Anmeldenummer: PCT/EP2018/056678
(87) Internationale Veröffentlichungsnummer: WO 2018/177776

(56) Entgegenhaltungen:
- EP-A1- 0 520 473
- DE-U1- 20 021 786
- DE-U1- 29 710 583

## Beschreibung

Die vorliegende Erfindung betrifft einen textilen Schlauch zur Ummantelung von länglichen Gegenständen.

Aus der EP 1 685 285 B1 ist ein radial schrumpfbarer textiler Gewebeschlauch bekannt, der zweilagig gewebt ist, mit einer oberen und einer unteren Gewebelage, wobei die Gewebelagen an ihren Kanten mit Bindungskettfäden miteinander verbunden sind und somit einen Schlauch ergeben. Derartige Schläuche werden z. b. im Bereich der Automobiltechnik zur mechanischen Verstärkung sowie der Steigerung der Abriebfestigkeit von Rohren und Schläuchen eingesetzt. Dafür werden sie über längliche Gegenstände, wie Rohre, Schläuche auch Schaumstoffleitungen gezogen und dann geschrumpft. Damit ist dann ein Schutz gegen mechanischen Abrieb gegeben. Daneben gibt es die Verwendung von Schaumrohrleitungen, z.B. EPDM - Schaumstoffleitungen zur Isolation. Derzeit werden in der Praxis Schaumstoffschläuche eingesetzt, z.B. auf EPDM-Basis, um Leitungen im Automobil gegen Wärmeverluste bzw. Kälteeinflüsse zu schützen. Dies können zum einen Medien wie z.B. Kühlflüssigkeiten führende Leitungen sein. Ebenso werden auch elektrische Leitungssätze damit ummantelt, sein. Eine Isolierung ist u. a. dazu da, um möglichen Leistungseinbußen des Antriebssystems eines Kfz vorzubeugen, die durch Wärmeverlust entstehen können. Die o. g. EPDM-Schaumstoffschläuche verfügen einerseits über eine hohe Isolationsfähigkeit, andererseits sind sie extrem anfällig gegen mechanische Einwirkungen wie z.B. Abrieb.

Die EP 0 520 473 A1 offenbart einen textilen Schlauch zur Ummantelung von länglichen Gegenständen mit einer radialelastische Außenschicht aus abriebbeständigem Material und wenigstens eine Innenschicht (2) aus thermisch isolierendem Material.

Es gibt im Automobilbau und in anderen Einsatzfällen aber auch längliche Gegenstände, z. B. im Motorraum von Kfz oder Rohrleitungen aus Polyamid zum Transport von Kühlflüssigkeiten, die grundsätzlich gegen thermische Einflüsse geschützt werden müssen. Demnach dürfen diese schon bei der Montage von Ummantelungen keiner Hitzebelastung ausgesetzt werden. Insofern sind hier unter Erwärmung aufschrumpfbare textile Gewebeschläuche nicht oder nur bedingt geeignet.

Aufgrund immer enger werdender Bauräume im Automobilbau ist die Wahrscheinlichkeit sehr hoch, dass im Motorraum eines Kfz zur thermischen Isolierung eingesetzte Schaumstoffleitungen mit anderen, beispielsweise heißen oder abrasiven Komponenten in Berührung kommen. Je nach Intensität der Berührung können hohe abrasive Kräfte auf die Schaumstoffleitung wirken, was zu einer raschen Zerstörung der Schaumstoffleitung führen und damit die Isolationswirkung stark einschränken kann.

Es ist eine Aufgabe der vorliegenden Erfindung, einen textilen Schlauch zur Ummantelung von länglichen Gegenständen vorzuschlagen, bei dem die aus dem Stand der Technik bekannten Nachteile vermieden oder zumindest stark verringert werden.

Die Aufgabe wird gelöst mit einem Schlauch gemäß Anspruch 1, nämlich einem textilen Schlauch zur Ummantelung von länglichen Gegenständen, der folgende Merkmale aufweist:
a) eine radialelastische Außenschicht aus abriebbeständigem Material und
b) wenigstens eine Innenschicht aus thermisch isolierendem Material,
der dadurch gekennzeichnet ist,
dass die Außenschicht (2) und die wenigstens eine Innenschicht (4) stellenweise durch eine textile Bindung (26), durch Nähen oder durch Kleben miteinander verbunden sind und
dass die Außenschicht (2) und die wenigstens eine Innenschicht (4) entlang axial verlaufender zueinander beabstandeter Zonen (12) miteinander verbunden sind.

Ein solcher erfindungsgemäßer Schlauch - mit definierter Wärmeleitfähigkeit und gleichzeitig hoher mechanischer Beständigkeit gegen Abrasion - kann auf thermisch zu isolierenden und abriebgefährdeten länglichen Gegenständen montiert werden. Diese können Stangen, Schläuchen, Kabelsträngen, Leitungen, Profilen, Rohrleitungen, insbesondere aus Polyamid sein, die nicht unbedingt langgestreckt vorliegen müssen, sondern jedwede Abknickungen zeigen dürfen. Der Schlauch kann in einem einzigen Arbeitsgang leicht aufgedehnt, auf den länglichen Gegenstand aufgezogen und in der gewünschten Position im Wesentlichen unverrückbar fest angebracht werden. Dabei kann vorteilhafterweise das aus dem Stand der Technik bekannte nachträgliche Übereinander-ziehen mehrerer Lagen entfallen. Auch die Verletzung einer abriebgefährdeten Isolierungsschicht, z. B. EPDM-Schaumstoffleitung wird vermieden. Der Begriff "radialelastische Außenschicht" soll sagen, dass die Außenschicht der Ummantelung aufgrund ihrer radialelastischen Struktur die Tendenz hat, den Schlauch radial zu verengen. Selbstverständlich hat die Außenschicht hierzu erfindungsgemäß die Eigenschaft, sich in Umfangsrichtung zu verkürzen, um eine Verengung in radialer Richtung zu bewirken.

Um den Montageaufwand bei der Verarbeitung möglichst gering zu halten, kann der Schutzschlauch vorzugsweise in einem Arbeitsgang in der Fertigung montiert werden können. Aus diesem Grund wird der erfindungsgemäße textile Schlauch favorisiert, da sein mehrlagiger Aufbau in einem Arbeitsgang erzeugt werden kann, und somit ein großer Montageaufwand durch nachträgliches Übereinander-ziehen mehrerer Schichten entfällt.

Hierbei ist der Schlauch derart gestaltet, dass die Außenschicht und die wenigstens eine Innenschicht stellenweise durch eine textile Bindung durch Nähen oder durch Kleben miteinander verbunden sind. Dies vereinfacht das Aufziehen des erfindungsgemäßen Schlauches zusätzlich, da sich seine beiden Schichten beim Aufziehen nicht gegeneinander bewegen und voneinander lösen können. Die Montage wird also sicherer und zuverlässiger.

Gemäß der Erfindung ist der Schlauch derart gestaltet, dass die Außenschicht und die wenigstens eine Innenschicht als Gewebe, Gestrick, Gewirk oder Geflecht ausgebildet sind. Dies erlaubt vorteilhafterweise eine sehr wirtschaftliche Produktion des erfindungsgemäßen Schlauches. Durch die Kombination einer abriebbeständigen textilen Außenschicht mit einer oder mehreren Innenschichten aus thermisch isolierendem Material kann ein Schlauch geschaffen werden, der gleichzeitig über Abriebbeständigkeit und eine hohe Isolationswirkung verfügt. Der Schlauch kann speziell auf sensiblen glatten Kunststoffleitungen verwendet werden, auf denen aufgrund ihrer geringen Hitzebeständigkeit keine Schläuche mittels Hitze aufgeschrumpft werden können.

Wenn der Schlauch beispielsweise gewebt ist, verfügt der Schlauch aufgrund eines elastischen Schussfadens aus Silikongummi ("silikonelastisch"), wie er beispielsweise aus der EP 2 352 613 B1 bekannt ist, in radialer Richtung über eine hohe Elastizität, bzw. Flexibilität, mit besten Rücksprungeigenschaften, die es ermöglichen, den Schlauch mit anschließend festem Sitz auf dem länglichen Gegenstand, leicht zu montieren.

In wieder einer anderen vorteilhaften Ausbildung der Erfindung ist der Schlauch derart gestaltet, dass er axial verlaufende Multifil-Fäden und in Umfangsrichtung verlaufende elastische Fäden und Multifil-Fäden aufweist. Durch Beifügen von in Umfangsrichtung verlaufenden Multifil-Fäden, die beispielsweise flottierend mit den elastischen Fäden verlaufen, kann einerseits die Wärmeleitfähigkeit des Schlauches gesteuert werden. Andererseits ist es möglich, das elastische Zusammenziehen des Schlauches zu beeinflussen. Außerdem ergeben sich aufgrund dieser vorteilhaften Weiterbildung gleichmäßigere Strukturen. Durch das Aufschieben und Aufbauschen der in Umfangsrichtung verlaufenden Multifil-Fäden beim Zusammenziehen des Schlauches um den länglichen Gegenstand, werden sog. Kettlücken vermieden. Die Stabilität des Schlauches steigt vorteilhafterweise.

In einer weiteren anderen vorteilhaften Ausbildung der Erfindung ist der Schlauch derart gestaltet, dass die Außenschicht mit einem die Verschleißfestigkeit steigernden Mittel beschichtet oder getränkt ist. Mit dieser vorteilhaften Maßnahme lässt sich individuell gewünscht die Lebensdauer des erfindungsgemäßen Schlauchs erreichen.

In noch einer weiteren vorteilhaften Ausbildung der Erfindung ist der Schlauch derart gestaltet, dass die wenigstens eine Innenschicht mit einem die Wärmeleitfähigkeit steigernden Mittel beschichtet oder getränkt ist. Mit dieser vorteilhaften Maßnahme lässt sich individuell gewünscht die Isolationsfähig des erfindungsgemäßen Schlauchs steigern.

Diese o. g. Mittel entsprechen im Stand der Technik bekannten sogenannten Ausrüstungsflotten. Diese Mittel zur Verbesserung der Wärmeleitfähigkeit, mechanischen Beständigkeit oder Kaltschneidefähigkeit können z. B. mittels Foulardieren, Rakeln oder Aufsprühen aufgebracht werden.

In wieder einer weiteren vorteilhaften Ausbildung der Erfindung ist der Schlauch derart gestaltet, dass er wenigstens teilweise aus ausgerüsteten Fäden besteht. Diese Ausführungsform bringt den Vorteil mit sich, dass je nach Optimierungsbedarf betreffend Wärmeleitfähigkeit, mechanische Beständigkeit sowie Kaltschneidefähigkeit für den gewünschten Einsatzzweck individuell ausgerüstete Fäden die Performance des erfindungsgemäßen Schlauchs positiv beeinflussen.

In einer anderen vorteilhaften Ausbildung der Erfindung ist der Schlauch derart gestaltet, dass die wenigstens eine Innenschicht innen mit einem Adhäsionsmittel bzw. einem Kleber benetzt ist. Hierdurch lässt sich die sichere Anbringung des erfindungsgemäßen Schlauchs auf dem ausgewählten länglichen Gegenstand insbesondere beim Einsatz in einer vibrierenden Umgebung noch steigern.

In einer weiteren anderen vorteilhaften Ausbildung der Erfindung ist der Schlauch derart gestaltet, dass die wenigstens eine Innenschicht in Form von Bändchen, insbesondere aus Schaumstoff gebildet ist. Innerhalb der Innenschicht in Form von Bändchen ist gegenüber einem regulären Faden vorteilhafterweise ein erhöhter Lufteinschluss möglich, wodurch sich die Isolationswirkung weiter steigern lässt.

Zum besseren Verständnis der Erfindung und um zu zeigen, wie diese ausgeführt werden kann, wird sie im Folgenden anhand eines Ausführungsbeispiels mit Hilfe einer Zeichnung kurz näher erläutert.
- Fig. 1: zeigt stark schematisiert in perspektivischer Ansicht einen Abschnitt eines längs etwa mittig aufgeschnittenen erfindungsgemäßen Schlauchs, um einen länglichen Gegenstand herum angeordnet und teilweise bereits um diesen zusammengezogen.
- Fig. 2.: zeigt in schematischer Darstellung einen Querschnitt durch den textilen Schlauch mit einer Einzelheit X.
- Fig. 3: zeigt stark schematisiert in perspektivischer Ansicht einen Abschnitt einer Ausführungsform eines erfindungsgemäßen Schlauchs.
- Fig. 4: zeigt stark schematisiert in perspektivischer Ansicht einen Abschnitt eines längs etwa mittig aufgeschnittenen erfindungsgemäßen Schlauchs, analog zu Fig. 1 ohne länglichen Gegenstand.
- Fig. 5: zeigt stark schematisiert in perspektivischer Ansicht einen Abschnitt eines erfindungsgemäßen textilen Schlauchs mit Längskammern.

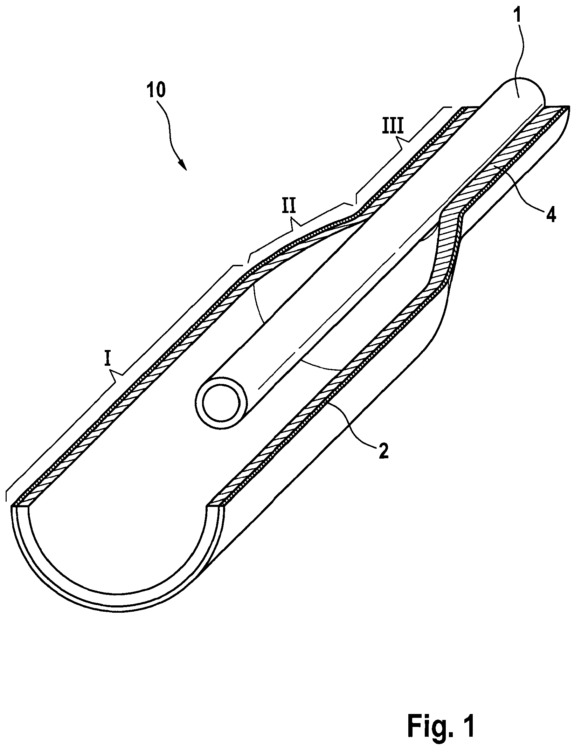

Fig. 1 zeigt einen längs etwa mittig aufgeschnittenen erfindungsgemäßen Schlauch 10, mit einer Außenschicht 2 und einer Innenschicht 4. Die Außenschicht 2 soll eine abrasionsbeständige Ummantelung darstellen, welche die isolierende Innenschicht 4 umgibt. Der Schlauch 10 ist in einem Bereich III bereits um einen länglichen Gegenstand, hier beispielsweise eine Rohrleitung 1, um diese herum aufgrund seiner radialelastischen Struktur bereits zusammengezogen dargestellt.

In den Bereichen I und II hat der Schlauch 10 noch einen Innendurchmesser, der größer als der Außendurchmesser der Rohrleitung 1 ist. Zu Beginn der Montage wird der erfindungsgemäße Schlauch 10, der z. B. mittels einer (nicht gezeigten) Vorrichtung auf einen Durchmesser gemäß Bereich I aufgeweitet ist, auf die Rohrleitung 1 geschoben, mit der Folge, dass er, wie der Übergang im Bereich II zeigen soll, sich aufgrund der radialen Elastizität der Außenschicht 2 zusammenzieht und sich an der Rohrleitung 1 anlegt. Im Bereich III ist der Schlauch 10 bereits radial ganz zusammen gezogen und fest sitzend auf der Rohrleitung 1 angeordnet. Gut zu erkennen ist, dass die isolierende Innenschicht 4 dicker ist, als die abrasionsbeständige Au-ßenschicht 2.

Im Bereich III ist der Schlauch 10 bereits zusammen gezogen und sitzt fest auf der Rohrleitung 1, wobei die isolierende Innenschicht 4 fest anliegt. Zwischen isolierender Innenschicht 4 und Rohrleitung 1 kann noch ein Kleber angebracht sein, um den Schlauch noch sicherer an der Rohrleitung 1 zu fixieren.

Im Bereich II soll der Vorgang des Zusammenziehens versinnbildlicht werden. Dabei verjüngt sich der Durchmesser des textilen Schlauchs 10, wobei gleichzeitig die Wandstärke der isolierenden Innenschicht 4 und der abriebbeständigen Außenschicht 2 zunimmt.

Die temperaturisolierende Innenschicht 4 hat vorteilhafterweise eine Wandstärke zwischen 0,5 bis 6mm. Die abrasionsbeständige Außenschicht 2 des textilen Schlauchs 10 hat die Funktion, die isolierende Innenschicht 4 gegen mechanische Einwirkungen von außen zu schützen.

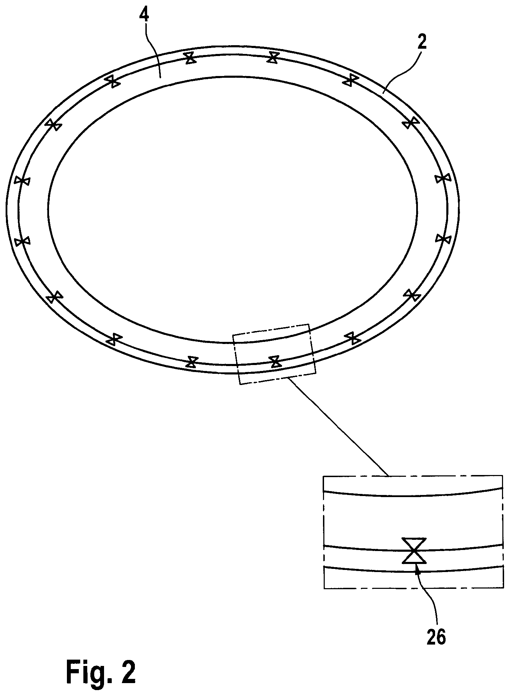

In Fig. 2 ist ein hier beispielsweise quer-oval ausgeführter erfindungsgemäßer Schlauch 10 gezeigt, mit einer Außenschicht 2 und einer Innenschicht 4, die mittels einer Vielzahl von Verbindungen 4, z. B. in Form einer Webbindung oder einer Heftmasche oder einer Flechtverbindung miteinander verbunden sind. Die Verbindung 26 kann auch bei Einsatz von mehreren Lagen von isolierenden Innenschichten 4 wie oben genannt zwischen diesen angeordnet werden. Die Verbindungen 26 erstrecken sich hierbei nicht nur umlaufend im textilen Schlauch 10, sondern auch in Längsrichtung desselben, um eine gleichmäßige Verbindung der einzelnen Lagen untereinander zu erzielen. Vorzugsweise werden diese Verbindungen 26 bindungstechnisch beim Herstellen des textilen Schlauchs 10 geschaffen. Der erfindungsgemäße Schlauch 10 kann durch Weben, Wirken, Stricken oder Flechten hergestellt werden. Als Verbindung 26 wäre auch eine nachträgliche Fixierung mittels Klebetechnik oder über ein Vernähen der einzelnen Lagen denkbar. In Fig. 2 rechts unten ist die Anordnung einer Verbindung 26 vergrößert dargestellt.

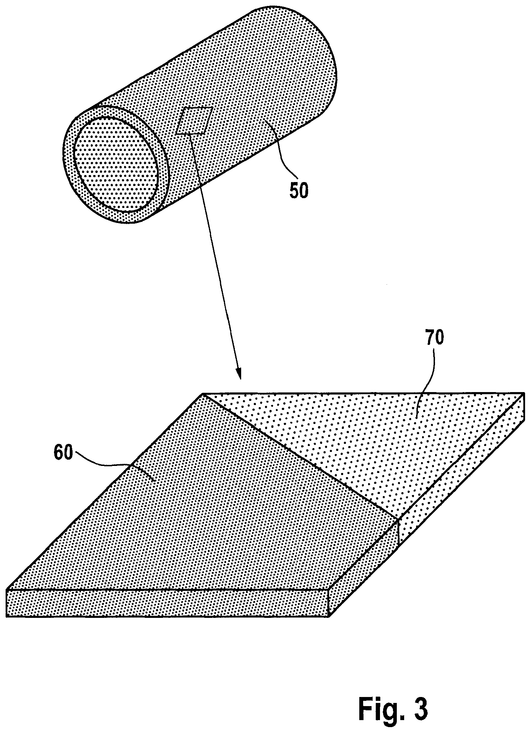

Fig.3 zeigt eine schematische Darstellung eines textilen Schlauches 50, wie er nach der Veredelung mittels einer zweckmäßigen Ausrüstungsflotte zur Verbesserung der Wärmeleitfähigkeit, mechanischen Beständigkeit oder vorliegt. Hierbei wird ein Ausschnitt des textilen Schlauchs 50 vergrößert dargestellt, um aufzuzeigen, dass die Ausrüstungsflotte (das ist ein Fluid zur Veredelung bzw. Ausrüstung eines textilen Gegenstandes, s. o.), im Folgenden als "Beschichtung" bezeichnet, den textilen Schlauch 50 durchtränkt. Mit dem Bezugszeichen 60 werden hierbei z. B. textile Schichten des Schlauches angegeben, die vollständig durchtränkt sind, während das Bezugszeichen 70 textile Schichten in ihrer Form unveredelten (vor dem Aufbringen einer Ausrüstungsflotte) angeben soll.

Denkbar wäre es auch, nur die Oberfläche des textilen Schlauches flächig zu benetzen und somit auf ein komplettes Durchtränken des gesamten textilen Schlauches zu verzichten. Durch das oberflächliche Benetzen werden die inneren Lagen nicht von der Ausrüstung (Ausrüstungsflotte) "versteift", wodurch die Bauschigkeit der Fäden der Innenschicht erhalten bleibt und sich bessere Isolationswerte erreichen lassen. Außerdem ergibt sich der Vorteil, dass sich Ausrüstungsmaterial einsparen lässt.

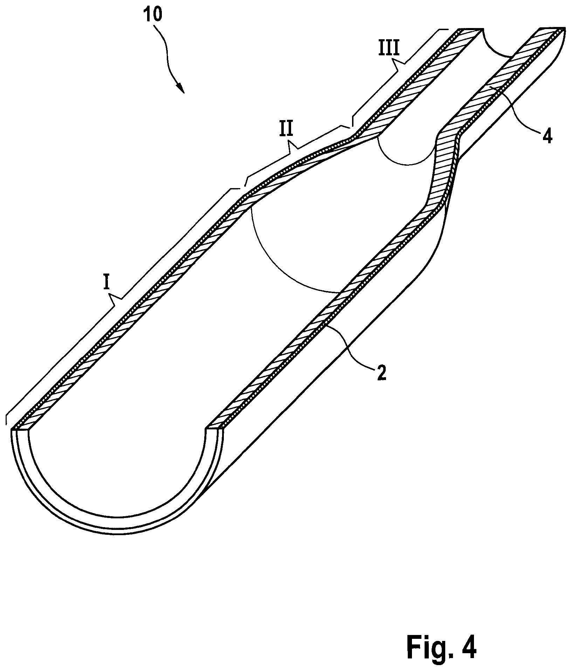

Fig. 4 zeigt stark schematisiert in perspektivischer Ansicht einen Abschnitt eines längs etwa mittig aufgeschnittenen erfindungsgemäßen Schlauchs, analog zu Fig. 1.

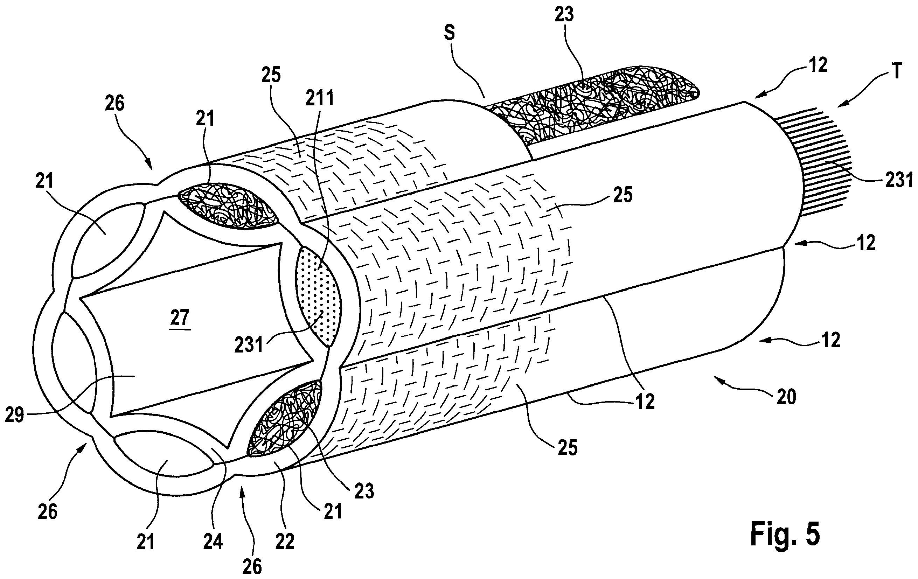

Fig. 5 zeigt stark schematisiert in perspektivischer Ansicht einen Abschnitt eines erfindungsgemäßen textilen Schlauchs 20 mit einer radialelastischen Außenschicht 22 und einer Innenschicht 24, sowie mit dazwischen liegenden Längskammern 21, welche zum Teil mit Füllfäden 23 gefüllt sind. Die Innenschicht 24 umgibt einen Innenraum 27, in welchem (nicht gezeigte) längliche Gegenstände, wie Rohre, Schläuche, Kabel etc. Platz finden können, bzw. welche mit dem erfindungsgemäßen Schlauch 20 ummantelt werden können. Ist der erfindungsgemäße Schlauch 20 um einen länglichen Gegenstand herum "aufgezogen" (Fig. 1), zieht er sich zusammen und legt sich eng um den länglichen Gegenstand an. Die innere Oberfäche 29 der inneren Schicht 24 kann vorteilhafterweise auch mit einem Kleber versehen sein, über welchen sich eine noch bessere Haftung des Schlauches 20 an dem länglichen Gegenstand erreichen lässt. Einige der beim Ausführungsbeispiel gemäß Fig. 5 gefüllten Kammern 21 enthalten Füllmaterial 23 in Form von Fäden, Bändchen, vorzugsweise aus Schaumstoff, mittels welchen die Isolationsfähigheit des Schlauches 20 beträchtlich steigern kann.

Die Außenschicht 22 und die Innenschicht 24 des erfindungsgemäßen Schlauches 20 sind wie in Fig. 5 gezeigt beispielsweise gewebt und im Bereich von Zonen 12 über z. B. gewebte Bindungen 26 miteinander verbunden. Zwischen den sich längs erstreckenden Zonen 12 sind die Kammern 21 angeordnet. Auf der Außenseite der Außenschicht 22 sind Fäden einer Leinwandbindung L 1/1 wie - I - I - I - I - I - angedeutet, in welcher der erfindungsgemäße Schlauch 20 beispielsweise gewebt ist. Es können jedoch auch andere Bindungsmuster zur Anwendung kommen. Der Schlauch kann aber ebenso auch gestrickt, geflochten oder gewirkt werden. Die radialelastische Außenschicht 22 besteht aus abriebbeständigem Material und die Innenschicht 24 aus thermisch isolierendem Material.

Zusätzlich zur thermischen Isolierung der Innenschicht 24 dienen Füllfäden 23, die in den Kammern 21 angeordnet sind. In Fig. 5 rechts oben ist eine "Füllung" einer Kammer 21 in Form von beispielsweise gekräuselten Fäden 23 "freigelegt" dargestellt. Hierzu ist die entsprechende Kammer an der Stelle "S" abgeschnitten gezeigt. Es ist jedoch auch möglich, eine Vielzahl anderer Füllmaterialien zu verwenden. In einer Kammer 211 sind beispielhafterweise gestreckte Fäden 231 eingefüllt, welche an der Stelle T 23 "freigelegt" dargestellt sind. Daneben können Schläuche, jedwedes geeignete thermische Isolationsmaterial, auch in Vlies- oder Bändchenform zum Einsatz kommen. Bei dem vorliegenden Ausführungsbeispiel ist ein Schlauch 20 mit einer Innenschicht 24 gezeigt. Es können gemäß der Erfindung aber auch mehrere Innenschichten 24 wie Zwiebelschalen über- bzw. ineinander liegend angeordnet werden, um z. B. die thermische Isolationsfähigkeit des Schlauches 20 zu erhöhen.

## Patentansprüche

1. Textiler Schlauch zur Ummantelung von länglichen Gegenständen, der folgende Merkmale aufweist:
a) eine radialelastische Außenschicht (2) aus abriebbeständigem Material und
b) wenigstens eine Innenschicht (4) aus thermisch isolierendem Material,
**dadurch gekennzeichnet,**
**dass** die Außenschicht (2) und die wenigstens eine Innenschicht (4) stellenweise durch eine textile Bindung (26), durch Nähen oder durch Kleben miteinander verbunden sind und
**dass** die Außenschicht (2) und die wenigstens eine Innenschicht (4) entlang axial verlaufender Zonen (12) miteinander verbunden sind wobei die Zonen (12) zueinander beabstandet sind.

2. Schlauch nach Anspruch 1, **dadurch gekennzeichnet, dass** zwischen der Au-ßenschicht (2) und der wenigstens einen Innenschicht (4) im Bereich von zwischen den Zonen (12) liegenden Kammern (14) Füllmaterial in Form von Fäden, Bändchen, vorzugsweise aus Schaumstoff angeordnet ist.

3. Schlauch nach Anspruch 1 oder 2, **dadurch gekennzeichnet, dass** die Außenschicht (2) und die wenigstens eine Innenschicht (4) als Gewebe, Gestrick, Gewirk oder Geflecht ausgebildet sind.

4. Schlauch nach Anspruch 1, 2 oder 3, **dadurch gekennzeichnet, dass** er axial verlaufende Multifil-Fäden und in Umfangsrichtung verlaufende elastische Fäden und Multifil-Fäden aufweist.

5. Schlauch nach Anspruch 1, 2, 3 oder 4, **dadurch gekennzeichnet, dass** die Außenschicht (2) mit einem die Verschleißfestigkeit steigernden Mittel beschichtet oder getränkt ist.

6. Schlauch nach einem der Ansprüche 1 bis 5, **dadurch gekennzeichnet, dass** die wenigstens eine Innenschicht (4) mit einem die Wärmeleitfähigkeit steigernden Mittel beschichtet oder getränkt ist.

7. Schlauch nach einem der vorhergehenden Ansprüche, **dadurch gekennzeichnet, dass** er wenigstens teilweise aus ausgerüsteten Fäden besteht.

8. Schlauch nach einem der vorhergehenden Ansprüche, **dadurch gekennzeichnet, dass** die wenigstens eine Innenschicht (4) innen mit einem Adhäsionsmittel bzw. einem Kleber benetzt ist.

9. Schlauch nach einem der vorhergehenden Ansprüche, **dadurch gekennzeichnet, dass** die wenigstens eine Innenschicht (4) in Form von Bändchen, insbesondere aus Schaumstoff gebildet ist.

10. Schlauch nach einem der vorhergehenden Ansprüche, **dadurch gekennzeichnet, dass** er eine Wärmeleitfähigkeit ≤ 0,3 W/m x K aufweist.

11. Schlauch nach einem der vorhergehenden Ansprüche, **dadurch gekennzeichnet, dass** er eine Wandstärke im Bereich von 1 bis 8 mm aufweist.

12. Schlauch nach einem der vorhergehenden Ansprüche, **dadurch gekennzeichnet, dass** die Außenschicht (2, 22) einen elastischen Schussfaden aus Silikongummi aufweist.

## Claims

1. Textile hose for encasing elongated objects, comprising the following features:
a) a radially elastic outer layer (2) made from wear-resistant material and
b) at least one inner layer (4) made from thermally insulating material,
**characterised in that** the outer layer (2) and the at least one inner layer (4) are joined together in places by a textile binding (26), by sewing or by bonding and
the outer layer (2) and the at least one inner layer (4) are joined together along zones (12) extending axially, the zones (12) being spaced apart from one another.

2. Hose according to claim 1, **characterised in that** filling material in the form of threads, ribbons, preferably made from foam material, is arranged between the outer layer (2) and the at least one inner layer (4) in the region of chambers (14) situated between the zones (12).

3. Hose according to claim 1 or 2, **characterised in that** the outer layer (2) and the at least one inner layer (4) are constructed as woven fabric, weft-knitted fabric, warp-knitted fabric or braided fabric.

4. Hose according to claim 1, 2 or 3, **characterised in that** it has multifilament threads running axially and elastic threads and multifilament threads running circumferentially.

5. Hose according to claim 1, 2, 3, or 4, **characterised in that** the outer layer (2) is coated or impregnated with an agent which increases the wear resistance.

6. Hose according to one of claims 1 to 5, **characterised in that** the at least one inner layer (4) is coated or impregnated with an agent which increases the thermal conductivity.

7. Hose according to one of the preceding claims, **characterised in that** it consists at least partially of finished threads.

8. Hose according to one of the preceding claims, **characterised in that** the at least one inner layer (4) is wetted internally with an adhesive or a glue.

9. Hose according to one of the preceding claims, **characterised in that** the at least one inner layer (4) is formed in the form of ribbons, in particular made from foam material.

10. Hose according to one of the preceding claims, **characterised in that** it has a thermal conductivity ≤ 0.3 W/m x K.

11. Hose according to one of the preceding claims, **characterised in that** it has a wall thickness ranging from 1 to 8 mm.

12. Hose according to one of the preceding claims, **characterised in that** the outer layer (2, 22) has an elastic weft thread made from silicone rubber.

## Revendications

1. Gaine textile destinée à l'enrobage d'objets oblongs qui présente les caractéristiques suivantes :
a) une couche extérieure (2) radialement élastique dans un matériau résistant à l'abrasion et
b) au moins une couche intérieure (4) dans un matériau thermiquement isolant, **caractérisée en ce que**
la couche extérieure (2) et la au moins une couche intérieure (4) sont reliées ensemble par endroits par une liaison textile (26), par couture ou par collage et
la couche extérieure (2) et la au moins une couche intérieure (4) sont reliées ensemble le long de zones (12) se déroulant axialement, dans laquelle les zones (12) sont espacées les unes des autres.

2. Gaine selon la revendication 1, **caractérisée en ce qu'**un matériau de remplissage sous la forme de fils, bandelettes, de préférence en mousse synthétique, est agencé entre la couche extérieure (2) et la au moins une couche intérieure (4) dans la région de compartiments (14) se situant entre les zones (12).

3. Gaine selon la revendication 1 ou 2, **caractérisée en ce que** la couche extérieure (2) et la au moins une couche intérieure (4) sont conçues en tant que tissu, tricot, tissu à mailles ou tissu tressé.

4. Gaine selon la revendication 1, 2 ou 3, **caractérisée en ce qu'**elle présente des fils multifilaments se déroulant axialement, et des fils et fils multifilaments élastiques se déroulant dans la direction circonférentielle.

5. Gaine selon la revendication 1, 2, 3 ou 4, **caractérisée en ce que** la couche extérieure (2) est revêtue ou imprégnée d'un milieu augmentant la résistance à l'usure.

6. Gaine selon l'une des revendications 1 à 5, **caractérisée en ce que** la au moins une couche intérieure (4) est revêtue ou imprégnée d'un milieu augmentant la conductivité thermique.

7. Gaine selon l'une des revendications précédentes, **caractérisée en ce qu'**elle se compose au moins partiellement de fils apprêtés.

8. Gaine selon l'une des revendications précédentes, **caractérisée en ce que** la au moins une couche intérieure (4) est intérieurement humectée avec un milieu d'adhésion ou une colle.

9. Gaine selon l'une des revendications précédentes, **caractérisée en ce que** la au moins une couche intérieure (4) est constituée sous forme de bandelettes, en particulier en mousse synthétique.

10. Gaine selon l'une des revendications précédentes, **caractérisée en ce qu'**elle présente une conductivité thermique ≤ 0,3 W/m x K.

11. Gaine selon l'une des revendications précédentes, **caractérisée en ce qu'**elle présente une épaisseur de paroi dans une plage allant de 1 à 8 mm.

12. Gaine selon l'une des revendications précédentes, **caractérisée en ce que** la couche extérieure (2, 22) présente un fil de trame élastique en caoutchouc de silicone.
